# EUROPÄISCHE PATENTSCHRIFT

(11) **EP 2 875 762 B1**
(45) Veröffentlichungstag und Bekanntmachung des Hinweises auf die Patenterteilung: **02.03.2016**
(21) Anmeldenummer: 14193123.8
(22) Anmeldetag: 14.11.2014
(51) Int. Cl.: A47J 43/046, A47J 43/07

(54) **Rührgefäß für eine Küchenmaschine**
Mixing container for a kitchen appliance
Récipient mélangeur pour un robot ménager

(30) Priorität: 22.11.2013 DE 102013112913
(43) Veröffentlichungstag der Anmeldung: 27.05.2015
(73) Patentinhaber: Vorwerk & Co. Interholding GmbH, 42275 Wuppertal (DE)
(72) Erfinder: Arnold, Hans-Peter, 58566 Kierspe (DE); Degen-Braun, Barbara, 42327 Wuppertal (DE)
(74) Vertreter: Müller, Enno

(56) Entgegenhaltungen:
- DE-A1-102010 016 667

## Beschreibung

Die Erfindung betrifft ein Rührgefäß für eine Küchenmaschine mit einem in dem Rührgefäß-Boden angeordneten und in das Innere des Rührgefäßes herausnehmbaren Rührwerk, wobei weiter ein mit dem Rührgefäß-Boden außenseitig verbindbarer Standfuß vorgesehen ist und eine Rührwerkwelle den Rührgefäß-Boden durchsetzt, wobei darüber hinaus an dem Rührwerk ein Durchsetzungskörper vorgesehen ist, der - in Axialrichtung betrachtet - auf mindestens zwei axial beabstandeten Ebenen, bezogen auf eine Drehachse der Rührwerkwelle radial vorstehende Festsetzungsvorsprünge zur Festsetzung des Standfußes an dem Rührgefäß und Drehblockierungsvorsprünge zur Zusammenwirkung mit dem Rührgefäß-Boden aufweist, wobei weiter in dem Rührgefäß-Boden eine zur Durchsetzung der Festsetzungsvorsprünge und Aufnahme der Drehblockierungsvorsprünge geeignete Kontur ausgebildet ist.

Rührgefäße der in Rede stehenden Art sind bekannt (siehe DE-A-102010016667). Diese finden insbesondere Einsatz in Verbindung mit einer elektromotorisch angetriebenen Küchenmaschine, weiter insbesondere für den Haushaltsbereich. Zum Verrühren oder auch Zerkleinern von in das Rührgefäß eingebrachter Medien, insbesondere von eingebrachten Lebensmitteln, ist bevorzugt zugeordnet dem Rührgefäß-Boden ein Rührwerk, beispielsweise in Form eines Messerwerks, angeordnet. Dessen Rührwerkwelle durchsetzt den Rührgefäß-Boden, insbesondere zur Ausbildung eines frei nach unten über den Rührgefäß-Boden hinausragenden Kupplungsmitnehmers. Weiter ist diesbezüglich bekannt, das Rührgefäß in eine Rührgefäß-Aufnahme der Küchenmaschine einzusetzen, in welcher Einsetzstellung das Rührgefäß sich über einen topfartigen Standfuß auf der durch die Rührgefäß-Aufnahme gegebenen Aufstandfläche abstützt. Auch dient ein solcher Standfuß in bekannter Weise zum Abstellen des Rührgefäßes auf einer Arbeitsfläche oder dergleichen nach Entnahme aus der Küchenmaschine.

Weiter ist diesbezüglich bekannt, das Rührwerk beispielsweise zu Reinigungszwecken und/ oder zum Zwecke des Austausches am Rührgefäß lösbar anzuordnen, so weiter beispielsweise zufolge einer bajonettartigen Befestigung des Rührwerks am Rührgefäß-Boden, dies weiter bevorzugt unter Einbindung und Festlegung des Standfußes an dem Rührgefäß.

Das Rührwerk durchsetzt gegebenenfalls einen, eine elektrische Widerstandsheizung aufweisenden Gefäßboden mit einem Durchsetzungskörper, welcher einteilig oder auch mehrteilig ausgebildet sein kann. Der Durchsetzungskörper ist wiederum durchsetzt von der Rührwerkwelle. Diesbezüglich ist weiter bekannt, zur Drehfestlegung an dem Gefäßboden wandungsaußenseitig des Durchsetzungskörpers Drehblockierungsvorsprünge vorzusehen, welche mit einer entsprechenden Kontur im Durchsetzungsbereich des Gefäßbodens zusammenwirken. Bekannt ist diesbezüglich die Anordnung von zwei diametral gegenüberliegenden Drehblockierungsvorsprüngen, welche mit entsprechend zwei diametral gegenüberliegenden Konturen im Gefäßboden zusammenwirken. Die weiter an dem Durchsetzungskörper vorgesehenen Durchsetzungsvorsprünge dienen zur Festsetzung des Rührwerks in der Drehblockierungsstellung an dem Gefäßboden, insbesondere unter Einbeziehung und gleichzeitiger Festsetzung des Standfußes an dem Rührgefäß.

Im Hinblick auf den vorbeschriebenen Stand der Technik wird die Aufgabe der Erfindung darin gesehen, ein Rührgefäß der in Rede stehenden Art hinsichtlich der Festsetzung des Rührwerks am Rührgefäß-Boden in gebrauchsvorteilhafter Weise weiter zu verbessern.

Die Lösung der Aufgabe ist nach dem Erfindungsgedanken bei einem Rührgefäß gegeben, bei welchem darauf abgestellt ist, dass die Kontur drei- oder mehrfach über den Umfang sich identisch wiederholend und in gleicher Abfolge betreffend einen Umfangswinkel ausgebildet ist, wobei innerste Abschnitte einer Axialnut in dem Durchsetzungskörper angeordnet sind, zur Zusammenwirkung mit der Kontur.

Zufolge der sich in Umfangsrichtung drei- oder mehrfach identisch wiederholenden Ausgestaltung der Kontur ist insbesondere das Fügen des Rührwerks in die Rührgefäß-Bodenöffnung vereinfacht. Es ergeben sich zunächst entsprechend mehr als zwei Steckpositionen, in welchen das Rührwerk beziehungsweise dessen Durchsetzungskörper mit den Festsetzungs- und Drehblockierungsvorsprüngen durch die Öffnung des Rührgefäßbodens geführt werden kann. Mit Erhöhung der Anzahl der Konturen ergibt sich eine weitere Erleichterung dieses Fügens. So sind bevorzugt drei, fünf, sechs oder zehn bis hin zu 24 identische Konturen bevorzugt gleichmäßig über den Umfang verteilt vorgesehen, vorzugsweise deren sechs. Die rührgefäßbodenseitige Kontur wird im Zuge des Fügevorganges zunächst durchsetzt von den Festsetzungsvorsprüngen, denen mit axialem Abstand die Drehblockierungsvorsprünge zur Zusammenwirkung mit der Kontur folgen. Um insbesondere im Zuge der Einführung der Drehblockierungsvorsprünge in die Kontur die durch die entsprechende Ausrichtung der Festsetzungsvorsprünge relativ zu der Kontur gefundene Drehausrichtung des Rührwerkes relativ zu der Kontur nicht zu verlieren, ist wandungsaußenseitig des Durchsetzungskörpers zumindest eine Axialnut vorgesehen, zur Zusammenwirkung mit Abschnitten der Kontur. Ist eine solche Axialnut in Art einer radialen Einsenkung geformt, so wirkt bevorzugt eine radiale Erhöhung im Bereich der Kontur beziehungsweise zwischen zwei in Umfangsrichtung benachbarten Konturen mit der Axialnut zusammen, insbesondere mit radial innersten Abschnitten der Axialnut. Hierdurch ist eine Drehsicherung gegeben, welche bevorzugt auch im Zuge des Fügevorganges wirkt, wenn weder Festsetzungsvorsprünge noch Drehblockierungsvorsprünge in die bodenseitige Kontur eingreifen.

Bevorzugt ist vorgesehen, dass die Festsetzungsvorsprünge insbesondere mit Bezug auf eine Wellenachse radial nicht weiter vorstehen als die Drehblockierungsvorsprünge. Es ergibt sich somit in vorteilhafter Weise die Möglichkeit, die Kontur im Gefäßboden zumindest hinsichtlich der radialen Erstreckung an die mit der Kontur in Einsteckstellung zusammenwirkenden Drehblockierungsvorsprünge anzupassen. In diesem Zusammenhang erweist es sich weiter von Vorteil, dass die Festsetzungsvorsprünge maximal eine gleiche Umfangserstreckung wie die Drehblockierungsvorsprünge aufweisen, so dass auch hier entsprechend bevorzugt allein eine Anpassung der Kontur an die Querschnittskontur der Drehblockierungsvorsprünge ausreicht. Die in Einsteckrichtung zumindest durch die Kontur zu führenden Festsetzungsvorsprünge weisen in bevorzugter Ausgestaltung Radial- und Umfangs-Erstreckungsmaße auf, die dem 0,5- bis 1-Fachen der entsprechenden Maße der Drehblockierungsvorsprünge entsprechen. So ist weiter bevorzugt zufolge Einführen beziehungsweise Durchführen der Festsetzungsvorsprünge durch die Kontur eine Drehausrichtung des Rührwerks beziehungsweise des Rührwerk-Lagers relativ zu der Kontur erreichbar.

In Einsteckrichtung des Rührwerks vorgelagert zu den Festsetzungsvorsprüngen ist in weiter bevorzugter Ausgestaltung eine gleichförmig, rotationssymmetrisch umlaufende, bevorzugt geschlossen ausgeformte Einführschräge ausgebildet. Diese bietet eine erste Einführhilfe im Zuge des Einsteckvorganges des Rührwerks in die Bodenöffnung. Die Einführschräge ist mit Bezug auf einen Axialschnitt durch den Durchsetzungskörper bevorzugt gebildet zufolge einer konischen Ausformung der Körperwandung; alternativ zufolge einer Verrundung im Übergang vom Körpermantel in einen in Einsteckrichtung vorgelagerten Boden des Durchsetzungskörpers. Die Einführschräge ist bevorzugt umlaufend ausgebildet, entsprechend bevorzugt kreisförmig. Weiter weist die Einführschräge eine geringere radiale Erstreckung als die Festsetzungsvorsprünge auf, insbesondere eine geringere radiale Erstreckung als ein geringstes Radialerstreckungsmaß eines Festsetzungsvorsprunges ausgehend von der Oberfläche des Durchsetzungskörpermantels. Hierbei erstreckt sich weiter bevorzugt ein Festsetzungsvorsprung absatzartig übergehend von der größten Radialerstreckung der Einführschräge ausgehend, weiter entsprechend von der sich an der Einführschräge anschließenden Mantelwandung des Durchsetzungskörpers. So ist weiter bevorzugt im Übergang von dem maximalen radialen Erstreckungsbereich der Einführschrägen ein sprungartiger Anstieg des Radialerstreckungsmaßes des sich hieran anschließenden Bereiches des Festsetzungsvorsprunges vorgesehen.

Zudem ist bevorzugt, dass ein Festsetzungsvorsprung auf Seiten der Drehblockierungsvorsprünge ein bezüglich einer Radialerstreckung des Durchsetzungskörpers zwischen den Festsetzungsvorsprüngen und den Drehblockierungsvorsprüngen gegebenes radiales Überstandsmaß aufweist von einem halben Millimeter oder mehr. Weiter bevorzugt ist hier ein diesbezügliches Überstandsmaß von 3 mm oder mehr bis hin zu 10 mm gegeben. Hieraus ergibt sich eine in Richtung auf die Drehblockierungsvorsprünge weisende Abstützflanke zur Festlegung des Rührwerks an dem Rührgefäßboden beziehungsweise an dem Standfuß. In diesem Zusammenhang erweist sich weiter von Vorteil, dass sich die Einführschräge jedenfalls umfangsmäßig außerhalb eines Festlegungsvorsprunges bis maximal zu dem radial inneren Maß des radialen Überstandsmaßes erstreckt.

Die Einführschräge übertrifft in bevorzugter Ausgestaltung hinsichtlich ihres größten Radialmaßes nicht ein geringstes Radialmaß des Nutbodens. So führt in bevorzugter Ausgestaltung die Einführschräge hinsichtlich ihres maximalen Radialmaßes stufenlos in den Nutgrund. Bei im Querschnitt verrundet ausgebildeter Einführschräge mündet der Nutboden im Bereich seines geringsten Radialmaßes bevorzugt tangential in der Einführschräge.

In radialer Draufsicht weist ein Festsetzungsvorsprung bevorzugt eine dreieckförmige Kontur auf, wobei der Spitzenbereich auf der den Drehblockierungsvorsprüngen abgewandten Seite ausgebildet ist. Entsprechend bevorzugt ist die Dreieckspitze des Festsetzungsvorprunges in Richtung auf die Einführschräge gerichtet. Es ergeben sich so, in Umfangsrichtung betrachtet, Seitenwandungen eines jeden Festsetzungsvorprunges, die in Einsteckrichtung des Rührwerkes betrachtet, ausgehend von der Einführschräge V-förmig sich erweiternd angeordnet sind. Diese schräg angestellten und somit eine weitere Einführhilfe zum Durchtreten der bodenseitigen Kontur formenden Abschnitte des Festsetzungsvorsprunges gehen bevorzugt über in die in Richtung Drehblockierungsvorsprünge weisende Festsetzungsflanke.

Eine radiale Stirnfläche eines Festsetzungsvorsprunges schließt in weiter bevorzugter Ausgestaltung mit der Achse der Rührwerkwelle im Querschnitt einen spitzen Winkel ein. So ist bevorzugt ein spitzer Winkel von 5 bis 30 Grad, weiter bevorzugt etwa 15 bis 20 Grad, gegeben. Die radiale Stirnfläche steigt hierbei in bevorzugter Ausgestaltung von dem der Einführschräge zugewandten Endbereich in Richtung auf die Drehblockierungsvorsprünge an. So ergibt sich weiter zugeordnet der Einführschräge ein geringeres radiales Überstandsmaß des Festsetzungsvorsprunges als in dem Bereich der Festsetzungsflanke, die in Richtung auf die Drehblockierungsvorsprünge weist.

Die dreieckförmige Kontur des Festsetzungsvorsprunges wie auch die spitzwinklige Anstellung der radialen Stirnfläche desselben führen zu einer günstigen Ein- und Durchführung des beziehungsweise der Festsetzungsvorsprünge in beziehungsweise durch die im Boden vorgesehene Kontur.

Bevorzugt ist zudem, dass axial zwischen den Festsetzungsvorsprüngen und den Drehblockierungsvorsprüngen ein durch die Axialnuten unterbrochener Zylinderabschnitt ausgebildet ist. Entsprechend handelt es sich hierbei bevorzugt um einen Abschnitt mit im Querschnitt kreisringförmiger Außenkontur, die durch die bevorzugt regelmäßige Anordnung von Axialnuten unterbrochen ist.

Weiter bevorzugt entspricht die Anzahl der Drehblockierungsvorsprünge der Anzahl von Konturen im Gefäßboden, so weiter bevorzugt entsprechend sechs.

Die Zahl der Festsetzungsvorsprünge entspricht bevorzugt maximal der Zahl der Drehblockierungsvorsprünge, weiter bevorzugt der Hälfte der Zahl der Drehblockierungsvorsprünge. So sind bei bevorzugter Anordnung von sechs Drehblockierungsvorsprüngen drei Festsetzungsvorsprünge vorgesehen, wobei weiter in axialer Richtung betrachtet die Festsetzungsvorsprünge in Überdeckung liegen zu den entsprechend zugeordneten Drehblockierungsvorsprüngen.

Die Axialnuten erstrecken sich in bevorzugter Ausgestaltung zwischen den Drehblockierungsvorsprüngen, sich hierbei weiter bevorzugt über den Zylinderabschnitt hinaus bis in den die Festsetzungsvorsprünge tragenden Umfangsbereich erstreckend.

Auch ist bevorzugt vorgesehen, dass der Standfuß eine Durchsetzungsöffnung für die Rührwerkwelle aufweist, weiter insbesondere zur freien Durchsetzung eines Kupplungsabschnittes der Rührwerkwelle, wobei die Rührwerkwelle zugleich zur Festsetzung des Standfußes an dem Rührgefäß-Boden in Zusammenwirkung mit den Festsetzungsvorsprüngen ausgebildet ist. Entsprechend ist bevorzugt keine gesonderte Festlegung des Standfußes an dem Rührgefäß beziehungsweise an dem Rührgefäß-Boden nötig. Vielmehr erfolgt eine solche Festlegung zufolge Festsetzung des Rührwerks, wobei ein dem Rührgefäß-Inneren zugewandter Lagerabschnitt des Rührwerkes mit dem Rührgefäß zusammenwirkt und die Festsetzungsvorsprünge des Durchsetzungskörpers mit dem Standfuß, insbesondere in einem, dem Rührgefäß-Boden abgewandten Bereich des Standfußes.

Die Festlegung des Standfußes erfolgt bevorzugt durch eine bajonettartige Verriegelung. Hierzu wird in bevorzugter Ausgestaltung nach Einführen des Rührwerks in die rührgefäßbodenseitige Öffnung der Standfuß unter Einfädeln der Festsetzungsvorsprünge durch die Durchsetzungsöffnung des Standfußes aufgesetzt und hiernach bevorzugt um die Gefäßachse gedreht. Hierdurch werden insbesondere die Festsetzungsvorsprünge in einen Hintergriff verbracht.

Die Durchsetzungsöffnung des Standfußes weist bevorzugt eine an die Anzahl der Drehblockierungsvorsprünge angepasste Anzahl an Auflaufschrägen für die Festsetzungsvorsprünge auf. Diese Auflaufschrägen wirken insbesondere im Zuge der verriegelnden Drehung des Standfußes mit Abschnitten der Festsetzungsvorsprünge zusammen, so insbesondere mit den in Richtung auf die Drehblockierungsvorsprünge weisenden Festlegungsflanken. Die Auflaufschrägen gehen bevorzugt in einen, im Wesentlichen senkrecht zu der Achse der Rührwerkwelle verlaufenden Halterungsabschnitt über. Dieser Halterungsabschnitt erstreckt sich bevorzugt in einer Ebene quer zur Achse, weiter bevorzugt zur zumindest annähernd vollflächigen Zusammenwirkung mit der Festsetzungsflanke des Festsetzungsvorsprunges in der Festsetzungsstellung von Standfuß und Rührwerk.

Bevorzugt sind die Auflaufschrägen, wie auch weiter bevorzugt die Halterungsabschnitte, an einem innerhalb des Standfußes abgefederten Festlegungsteil ausgebildet. Die Abfederung wirkt hierbei im Wesentlichen in axialer Richtung relativ zu einem das Festlegungsteil aufnehmenden Standfußabschnitt, weiter bevorzugt in eine Richtung abgewandt dem Rührgefäß-Boden.

Das Festlegungsteil ist in weiter bevorzugter Ausgestaltung kreisringförmig ausgebildet, dies insbesondere bei radial innerer Anordnung der Auflaufschrägen und der Halterungsabschnitte an dem Kreisringteil.

Das Festlegungsteil ist unter Zwischenlage einer Feder in einer bevorzugt kreisringförmigen Aufnahme des Standfußes rastgehaltert. Die Verrastung bietet Raum zur axialen Verlagerbarkeit des Festlegungsteiles. Diese axiale Verlagerbarkeit wird im Zuge der Festlegung des Standfußes und des Rührwerks entgegen der Kraft der Feder herbeigeführt.

Die Feder ist bevorzugt als in Umfangsrichtung wellenförmiges Federelement ausgebildet. Dies kann beispielsweise ein federbares Kunststoffteil sein. Durch die Wellenform stützt sich das Federelement, abwechselnd über den Umfang betrachtet, auf einer Abstützfläche der kreisringförmigen Aufnahme und einer zugewandten Fläche des Festlegungsteiles ab.

Bevorzugt ist das Federelement ein Metallfederband.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos, also beispielsweise ein Zehntel der Länge, Breite etc. Wenn beispielsweise auf eine fünffache Länge, bezogen auf eine Breite oder anderes Längenmaß angegeben ist, kann dies auch eine 4,9-Fache, 4,8-Fache etc. sein, dies bezogen auf die Eingrenzung der genannten Bereichsgrenzen von unten und/ oder oben, alternativ oder ergänzend aber auch im Hinblick auf die Offenbarung eines oder mehrerer singulärer Werte aus einem jeweils angegebenen Bereich.

Nachstehend ist die Erfindung anhand der beigefügten Zeichnung erläutert, die aber lediglich ein Ausführungsbeispiel darstellt. Es zeigt auf der Zeichnung:
- Fig. 1: in Ansicht eine erfindungsgemäße Küchenmaschine mit einem Rührgefäß sowie einem in dem Rührgefäß angeordneten, antreibbaren Rührwerk;

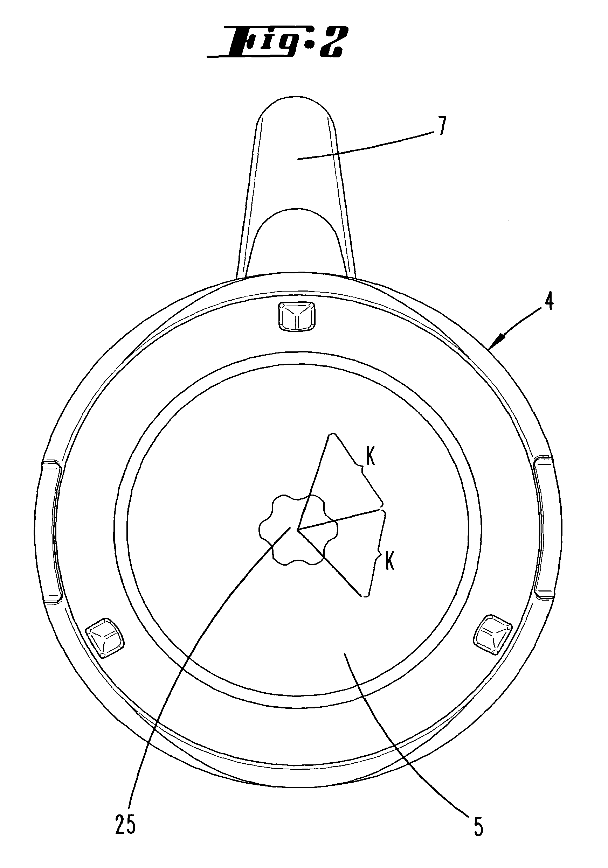

- Fig. 2: eine Draufsicht auf das Rührgefäß bei entnommenem Rührwerk;

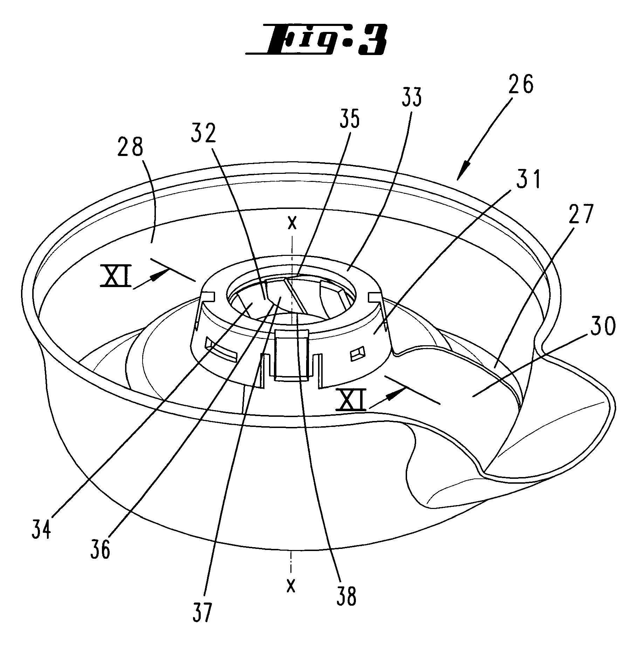

- Fig. 3: in perspektivischer Darstellung einen der Befestigung des in dem Rührgefäß vorzusehenden Rührwerks dienenden, vom Rührgefäß abnehmbaren Standfuß in perspektivische Einzeldarstellung;

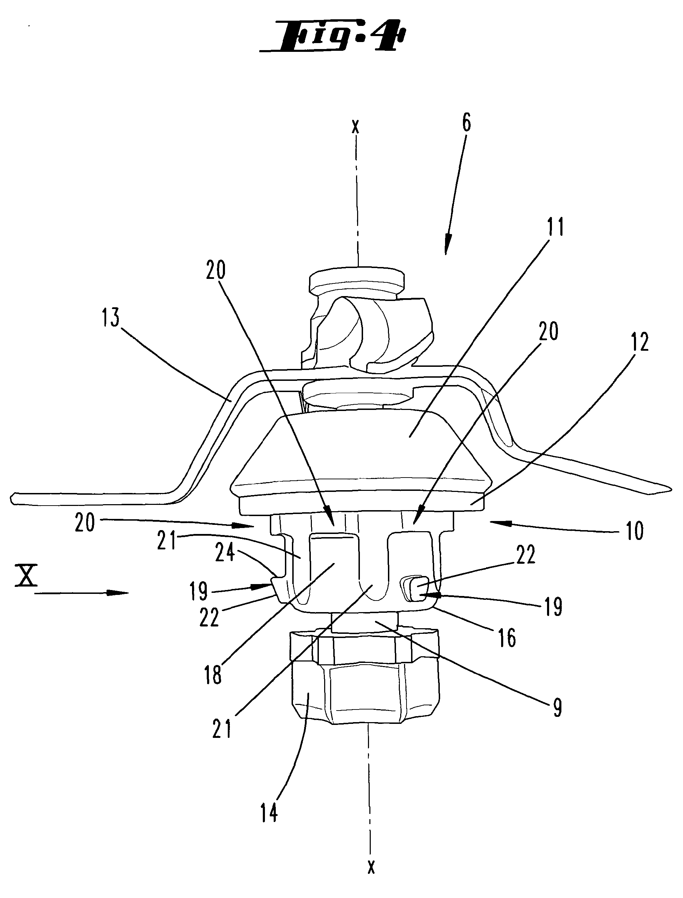

- Fig. 4: das Rührwerk in perspektivischer Einzeldarstellung;

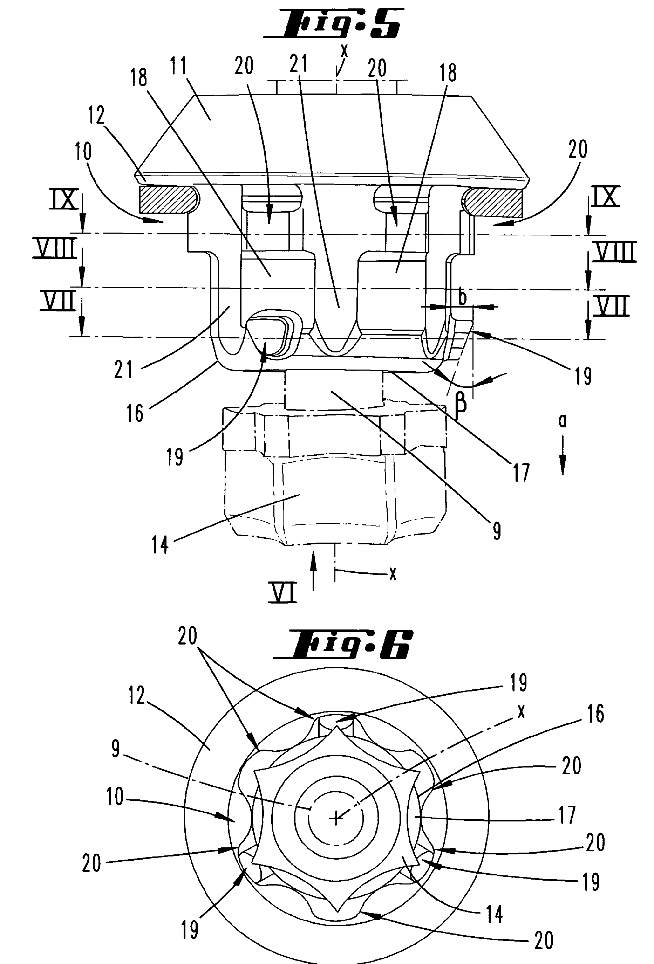

- Fig. 5: in Seitenansicht einen Durchsetzungskörper des Rührwerks;
- Fig. 6: die Ansicht gemäß Pfeil VI in Figur 5 gegen den Durchsetzungskörper;
- Fig. 7: den Schnitt gemäß der Linie VII-VII in Figur 5;
- Fig. 8: den Schnitt gemäß der Linie VIII-VIII in Figur 5;
- Fig. 9: den Schnitt gemäß der Linie IX-IX in Figur 5;

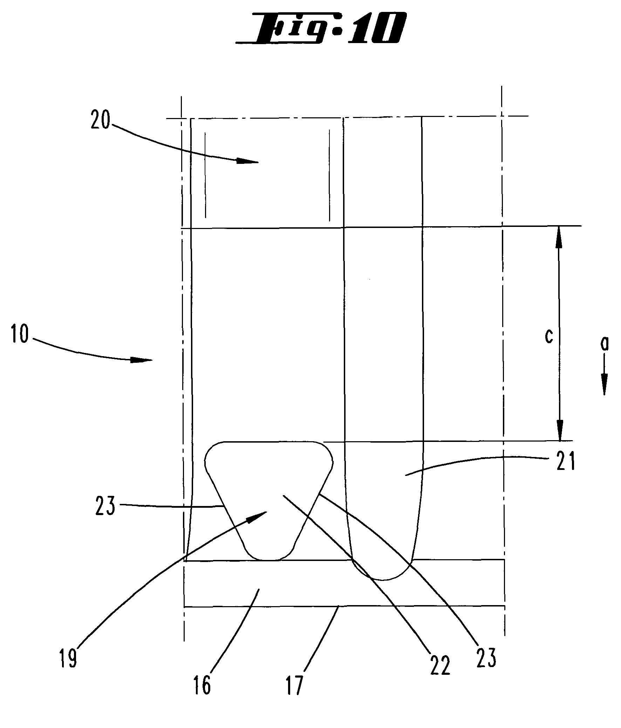

- Fig. 10: in vergrößerter Ausschnitt-Darstellung eine radiale Draufsicht auf den Durchsetzungskörper gemäß Pfeil X in Figur 4;

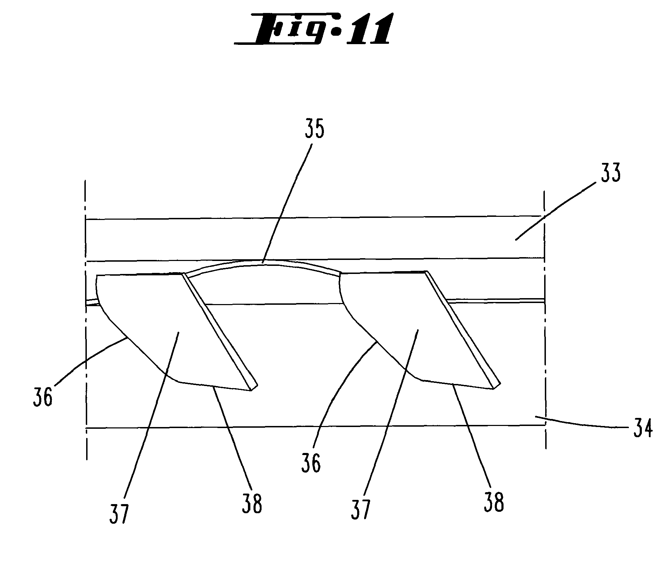

- Fig. 11: eine Detailansicht in Abwicklung, den Schnittbereich XI in Figur 3 betreffend;

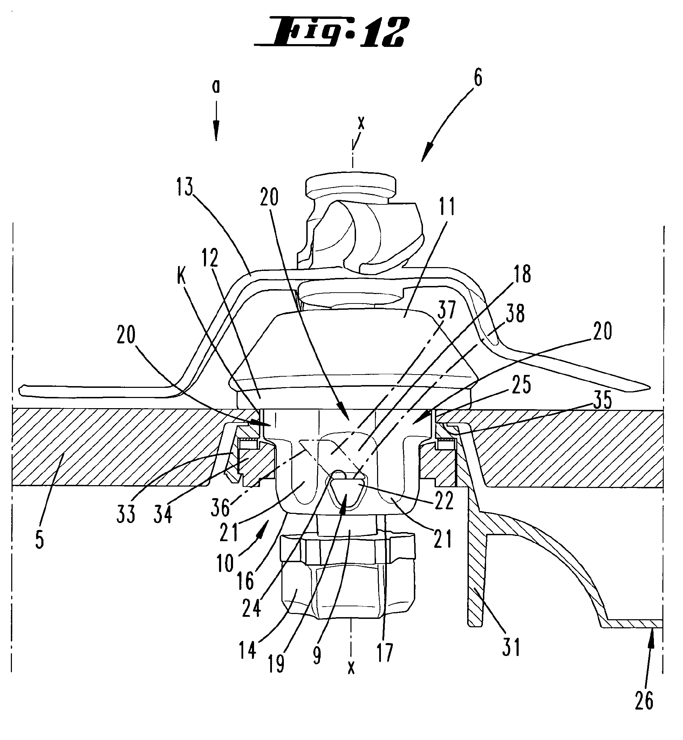

- Fig. 12: in Vertikalschnitt-Darstellung den Zusammenwirkungsbereich von Rührwerk, Rührgefäßboden und Standfuß, die Festsetzungsstellung betreffend.

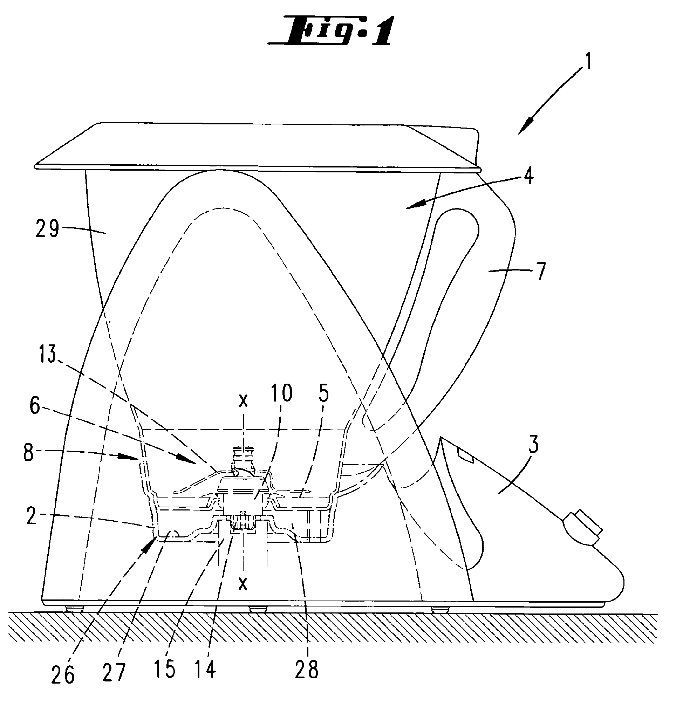

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 eingesetzt wird. In dem Rührgefäß 4 ist, dem Rührgefäß-Boden 5 zugeordnet, ein Rührwerk 6 vorgesehen, welches über einen in der Küchenmaschine 1 innerhalb der Rührgefäß-Aufnahme 2 angeordneten, nicht dargestellten Elektroantrieb betreibbar ist.

Das in die Rührgefäß-Aufnahme 2 einzusetzende Rührgefäß 4 besitzt einen im Wesentlichen senkrecht ausgerichteten Haltegriff 7. Der Sockelbereich 8 des Rührgefäßes 4 ist topfartig mit kreisrundem Querschnitt ausgebildet und trägt zentral im Inneren das Rührwerk 6.

In dem dargestellten Ausführungsbeispiel ist bodenseitig des Rührgefäßes 4 weiter eine elektrische Widerstandsheizung vorgesehen.

Das Rührwerk 6 weist eine zumindest in der der Rührgefäß-Aufnahme 2 aufgenommenen Stellung des Rührgefäßes 4 vertikal ausgerichtete Rührwerkwelle 9 auf. Deren geometrische Achse x durchsetzt das Rührgefäß 4 mittig, bildet zumindest im Sockelbereich 8 bevorzugt zugleich die Mittelachse des Rührgefäßes 4.

Die Rührwerkwelle 9 ist umgeben von einem auch der Lagerung der Rührwerkwelle 9 dienenden Durchsetzungskörper 10. Dieser weist zunächst mit Bezug auf einen, auf eine Horizontalebene projizierten Grundriss eine annähernd kreisrunde Außenkontur auf, ist entsprechend bevorzugt im Wesentlichen kreiszylindrisch ausgebildet.

Der Durchsetzungskörper 10 geht im Bereich eines axialen Endes über in einen drehfest mit diesem verbundenen Aufsetzabschnitt 11. Mittels diesem sitzt das Rührwerk 6 in der Einbausituation unter Zwischenlage einer, im Übergangsbereich vom Durchsetzungskörper 10 zum Aufsetzabschnitt 11 angeordneten, den Durchsetzungskörper 10 im Wesentlichen umgreifenden Dichtung 12 auf dem Rührgefäßboden 5 auf.

Der sich an den Durchsetzungskörper 10 anschließende Bereich des Aufsetzabschnittes 11 ist gegenüber dem Durchsetzungskörper 10 durchmesservergrößert. Von diesem vergrößerten Abschnitt ausgehend verjüngt sich der Aufsetzabschnitt 11 in bevorzugter Ausgestaltung konisch in eine dem Durchsetzungskörper 10 abgewandte Richtung.

Der Durchsetzungskörper 10 wie auch der Aufsetzabschnitt 11 sind durchsetzt von der Rührwerkwelle 9, welche darüber hinaus bevorzugt insbesondere innerhalb des Aufsetzabschnittes 11 gelagert ist.

Dem Aufsetzabschnitt 11 zugewandt, trägt der über den Aufsetzabschnitt 1 hinausragende Endabschnitt der Rührwerkwelle 9 einen bevorzugt im Grundriss kreuzartig angeordneten Messersatz 13.

Das dem Messersatz 13 abgewandte freie Ende der Rührwerkwelle 9 ist drehfest verbunden mit einem im Grundriss bevorzugt sternförmig ausgebildeten Kupplungsmitnehmer 14. Letzterer steht in der Benutzungsstellung des Rührgefäßes 4 in der Rührgefäß-Aufnahme 2 mit einer maschinenseitigen, durch den Elektromotor antreibbaren Kupplungsaufnahme 15 drehfest in Verbindung.

Der dem Kupplungsmitnehmer 14 zugewandte Endbereich des Durchsetzungskörpers 10 ist bevorzugt mit einer gleichförmig umlaufenden, entsprechend rotationssymmetrischen und darüber hinaus bevorzugt geschlossen ausgeformten Einführschräge 16 versehen. Diese ist insbesondere gebildet zufolge einer Verrundung des Übergangsbereiches zwischen der quer zur Achse x ausgerichteten Stirnfläche 17 und der umlaufenden Mantelwandung des Durchsetzungskörpers 10, insbesondere des zentralen Zylinderabschnittes 18. Die Einführschräge 16 ist alternativ zufolge einer konischen Ausgestaltung des entsprechenden Endabschnittes des Zylinderabschnittes 18 ausgeformt, dies weiter bevorzugt - mit Bezug auf einen Vertikalschnitt durch den Bereich - unter Einbeziehung einer Schrägen, die einen spitzen Winkel zur Achse x von bevorzugt 30 bis 60° einschließt.

Der Durchsetzungskörper 10 weist weiter in Axialrichtung betrachtet, auf zwei axial zueinander beabstandeten Ebenen mit Bezug auf die Achse x radial, insbesondere über die Mantelfläche des Zylinderabschnittes 18 vorstehende Festsetzungsvorsprünge 19 und Drehblockierungsvorsprünge 20 auf.

Die Drehblockierungsvorsprünge 20 sind hierbei in einer Ebene unterhalb des Aufsetzabschnittes 11, weiter bevorzugt unmittelbar anschließend an die, den Durchsetzungskörper 10 umgebende Dichtung 12 ausgebildet. Bevorzugt sind diesbezüglich gleichmäßig über den Umfang verteilt sechs Drehblockierungsvorsprünge 20 vorgesehen, welche gleich gestaltet sind.

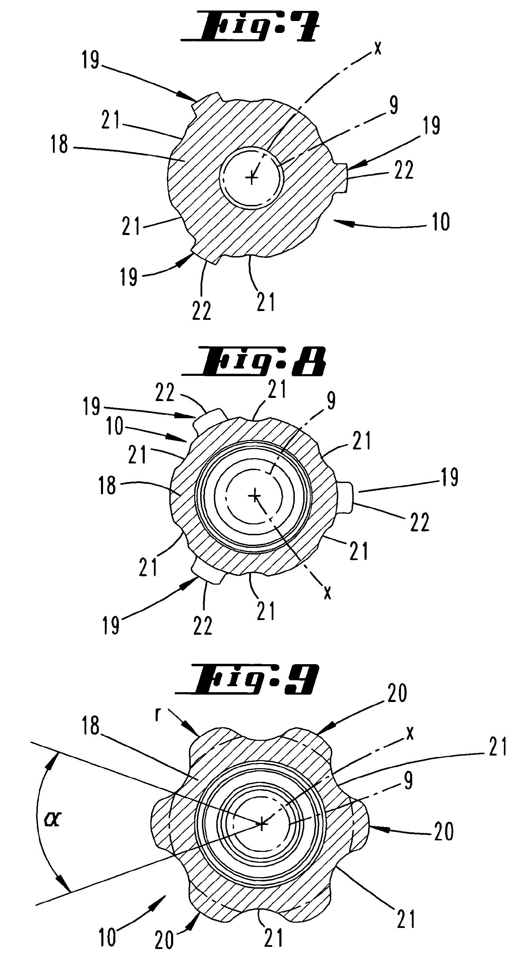

Jeder Drehblockierungsvorsprung 20 ist mit Bezug auf einen Querschnitt gemäß Figur 9 nach radial außen hin konvex gewölbt, wobei bevorzugt die hierdurch gegebene Außenkontur durch einen Kreislinienabschnitt gegeben ist, dessen Radius bevorzugt dem 0,15- bis 0,4-Fachen, weiter bevorzugt etwa dem 0,25-Fachen des Radius des Durchsetzungskörpers 10 im Bereich des Zylinderabschnittes 18 entspricht.

Mit Bezug auf die Schnittpunkte der Außenkonturlinie eines Drehblockierungsvorsprunges 20 mit der in axialer Richtung betrachteten Projektionslinie der Außenkontur des Zylinderabschnittes 18 erstreckt sich ein Drehblockierungsvorsprung 20 bevorzugt über einen Winkel Alpha von etwa 30°.

In Umfangsrichtung betrachtet zwischen zwei Drehblockierungsvorsprüngen 20 ist jeweils eine gegenüber einem Drehblockierungsvorsprung 20 betrachtete Negativausformung vorgesehen. Diese ist so ausgebildet, dass sich gleichfalls eine kreislinienabschnittförmige Kontur ergibt, die jedoch entsprechend von der Achse x betrachtet konkav verläuft. Weiter bevorzugt ist in diesem Bereich ein Radius gewählt, der dem Radius r eines Drehblockierungsvorsprunges 20 entspricht, weiter zumindest dem 0,8-Fachen bis hin zu einem 1,2-Fachen.

Die Kreislinienabschnitte von Drehblockierungsvorsprüngen 20 und der Negativausformung gehen bevorzugt tangential ineinander über, weiter bevorzugt zumindest etwa im Schnittpunktbereich der Konturlinien mit der Außenkonturlinie des Zylinderabschnittes 18 (mit Bezug auf eine Projektion in Achsrichtung).

Entsprechend ist weiter in Umfangsrichtung betrachtet zwischen den Drehblockierungsvorsprüngen 20 die kreisrunde Außenkontur des Zylinderabschnittes 18 unterbrochen. Es sind, die Negativausformungen aufnehmende Axialnuten 21 ausgeformt, welche sich weiter bevorzugt über die gesamte axiale Länge des Durchsetzungskörpers 10 und somit über die gesamte axiale Länge des Zylinderabschnittes 18 erstrecken.

Die Axialnuten 21 erstrecken sich weiter bevorzugt bis in den Bereich der Einführschräge 16, wobei bevorzugt ein mit Bezug auf die Achse x betrachtetes Radialmaß im Bereich eines Nutbodens bevorzugt gleich ist dem größten Radialmaß der Einführschräge 16 im Übergangsbereich zum Zylinderabschnitt 18.

In Einsteckrichtung a bevorzugt unmittelbar nachgeordnet der Einführschräge 16 sind weiter bevorzugt mantelaußenseitig des Zylinderabschnittes 18 die Festsetzungsvorsprünge 19 geformt. Bevorzugt sind deren drei gleichmäßig über den Umfang verteilt vorgesehen.

Jeder Festsetzungsvorsprung 19 ist bevorzugt in Umfangsrichtung betrachtet flankiert von einer Axialnut 21, liegt entsprechend weiter bevorzugt bei einer Projektion in Axialrichtung in Überdeckung zu einem Drehblockierungsvorsprung 20.

Ein jeder Festsetzungsvorsprung 19 geht - ausgehend von der größten Radialerstreckung der Einführschräge 16, weiter entsprechend bevorzugt ausgehend von der Außenkontur des Zylinderabschnittes 18 - absatzartig aus. Eine radiale Stirnfläche 22 verläuft entsprechend bevorzugt radial beabstandet zu der Außenfläche des Zylinderabschnittes 18. Diese radiale Stirnfläche 22 weist eine im Wesentlichen dreieckförmige Kontur auf, mit einem nach unten, in Richtung auf die Einführschräge 16 gerichteten Spitzenbereich. Dieser Spitzenbereich ist bevorzugt verrundet. Von diesem Spitzenbereich ausgehend erstrecken sich in Umfangsrichtung zueinander beabstandete Seitenwände 23 unter Einschluss eines Winkels von etwa 15 bis 45°, bevorzugt etwa 30° zueinander bis in eine quergerichtete Festsetzungsflanke 24. Diese Festsetzungsflanke 24 erstreckt sich bevorzugt in einer Ebene quer zur Achse x, wobei weiter hier ein Überstandsmaß (ausgehend von der Außenwandung des Zylinderabschnittes 18) von etwa 3 bis 4 mm gewählt ist. Weiter bevorzugt entspricht das Überstandsmaß b dem entsprechenden Überstandsmaß im Bereich eines Drehblockierungsvorsprunges 20.

Zudem schließt die radiale Stirnfläche 22 eines Festsetzungsvorsprunges 19 mit der Achse x beziehungsweise mit einer Achsparallelen im Querschnitt einen spitzen Winkel Beta von 10 bis 30°, bevorzugt 15° ein derart, dass der Festsetzungsvorsprung 19 sich in Einsteckrichtung a betrachtet ausgehend von dem der Einführschräge 16 zugewandten Bereich hin zu der Festsetzungsflanke 24 radial erweitert.

Der axiale Abstand c zwischen einer Festsetzungsflanke 24 und der zugewandten Unterseite eines Drehblockierungsvorsprunges 20 entspricht in weiter bevorzugter Ausgestaltung etwa dem halben Axialerstreckungsmaß des Durchsetzungskörpers 10, weiter bevorzugt etwa dem 1,2- bis 2-Fachen der axialen Höhe eines Festsetzungsvorsprunges 19.

In dem Rührgefäß-Boden 5 ist zur Festsetzung des Rührwerks 6 eine zentrale Öffnung 25 vorgesehen, mit einer Kontur K zur Durchsetzung der Festsetzungsvorsprünge 19 und Aufnahme der Drehblockierungsvorsprünge 20 im Zuge des Einsetz- und Festlegungsvorganges des Rührwerks 6 in dem Rührgefäß 4.

Eine Kontur K setzt sich hierbei bevorzugt zusammen aus einer radialen Erweiterung der Öffnung 25 und einer in Umfangsrichtung benachbarten Einschnürung und somit Einengung des Öffnungsquerschnittes.

Die Erweiterung ist gegeben durch eine von der Achse x betrachtete kreisabschnittförmige, konvexe Erweiterung, wobei die Kreisabschnittlinie bevorzugt einen Radius aufweist, der dem 1,05- bis 1,2-Fachen des Radius r eines Drehblockierungsvorsprunges 20 entspricht. Entsprechend weiter ist auch der Radius der in Umfangsrichtung benachbarten konkaven Einengung mit einem derartigen Radius versehen. Es ergibt sich ein etwa sinusförmiger Verlauf der Randkante einer Kontur K.

Die so gewählte Kontur K wiederholt sich in Umfangsrichtung identisch und in gleicher Abfolge mehrfach. So ist die Kontur K bevorzugt 6-Fach in Umfangsrichtung gleichmäßig verteilt vorgesehen. Es ergibt sich so bevorzugt eine Öffnung 25 mit einer Außenkontur, welche Kontur gleich der Querschnitts-Außenkontur des Durchsetzungskörpers 10 im Bereich der Drehblockierungsvorsprünge 20 ausgebildet ist, wenngleich weiter bevorzugt hinsichtlich der Öffnung 25 ein umlaufendes Überstandsmaß von 0,2 bis 1 mm vorgesehen ist.

Bevorzugt ist die konturierte Öffnung 25 aus dem Rührgefäß-Boden 5 gestanzt.

Zur Bestückung des Rührgefäßes 4 mit dem Rührwerk 6 wird dieses vom Gefäßinneren her durch die Öffnung 25 geführt, wobei zunächst in Einsteckrichtung a betrachtet die Einführschräge 16 zu einer Vorzentrierung (Finden der Mitte) führt.

Hiernach tauchen die bevorzugt drei Festsetzungsvorsprünge 19 durch die radial erweiterten Konturabschnitte der Öffnung 25, wobei hierbei eine Findung des korrekten Ausrichtwinkels des Durchsetzungskörpers 10 relativ zu der konturierten Öffnung 25 erreicht wird. Unterstützt wird dies durch die im Spitzenbereich verrundeten Festsetzungsvorsprünge 19, wobei die hieran anschließenden Seitenwände 23 die Ausrichtung unterstützen.

Bei der hiernach weiter in Einsteckrichtung a erfolgenden Verlagerung des Rührwerks 6 greifen die nach radial innen vorstehenden Konturabschnitte der Öffnung 25 zufolge der erfolgten Drehwinkelausrichtung in die Axialnuten 21, womit im Zuge dieser weiteren Axialverlagerung die gefundene Drehwinkelposition beibehalten wird bis hin zu der drehblockierten Einstecksituation, in welcher die Drehblockierungsvorsprünge 20 in die radial erweiterten Zonen der konturierten Öffnung 25 eintauchen. Das Rührwerk 6 beziehungsweise dessen Durchsetzungskörper 10 zusammen mit dem Aufsetzabschnitt 11 sind hiernach drehfest an dem Rührgefäß-Boden 5 festgesetzt. Die durch den Durchsetzungskörper 10 umgebene Rührwerkwelle 9 ist frei gegenüber dem Durchsetzungskörper 10 um die Wellenachse x drehbar.

Der Durchsetzungskörper 10 weist weiter eine vertikale Höhe auf, die größer gewählt ist als die in vertikaler Richtung betrachtete Dicke des Rührgefäß-Bodens 5, wobei weiter die Festsetzungsvorsprünge 19 zugeordnet dem in Zuordnungsstellung vertikal nach unten weisenden Randbereiche des Durchsetzungskörpers 10 angeformt sind. Entsprechend greifen Festsetzungsvorsprünge 19 in der Einsteckstellung des Rührwerks 6 im Rührgefäß-Boden 5 über die nach vertikal unten weisende, die Öffnung 25 aufweisende Bodenfläche hinaus zur Zusammenwirkung mit einem Gegenrastmittel.

Dieses Gegenrastmittel ist bevorzugt ein aus einem Hartkunststoffmaterial gefertigter, topfartiger Standfuß 26. Dieser besitzt zunächst einen Abstützboden 27, von welchem randseitig umlaufend ausgehend sich ein im Vertikalschnitt etwa an einer Vertikalen ausgerichteter Kragen 28 anschließt. Auf der nach oben gerichteten Stirnrandkante des Kragens 28 stützt sich in Zuordnungsstellung das Rührgefäß 4 im Bereich einer außenseitig der Rührgefäß-Wandung 29 ausgeformten Schulter ab.

Im Abstützboden 27 ist eine Ausnehmung 30 zum Durchtritt beziehungsweise zur Freilegung von rührgefäßseitigen Kontaktierungsmitteln, insbesondere elektrischen Kontaktierungsmitteln vorgesehen.

Zentral wächst aus dem Abstützboden 27 ein in den Innenraum des Standfußes 26 hineinragender Dom 31 aus, mit einer zentralen Durchsetzungsöffnung 32 für den rührwerkseitigen Durchsetzungskörper 10.

Der Dom 31 formt bevorzugt eine kreisringförmige Aufnahme 33 aus, mit einem Innendurchmesser, welcher bevorzugt dem größten Außendurchmesser des Durchsetzungskörpers 10 im Bereich der Festsetzungsvorsprünge 19 entspricht.

In Axialrichtung betrachtet unterseitig der Aufnahme 33 ist weiter bevorzugt ein kreisringförmig ausgebildetes Festlegungsteil 34 vorgesehen. Dessen freier Innendurchmesser entspricht bevorzugt dem freien Innendurchmesser der Aufnahme 33.

Das Festlegungsteil 34 ist in Axialrichtung betrachtet relativ zu der Aufnahme 33 beweglich, hierbei an der Aufnahme 33 entsprechend beweglich gehaltert. Es ergibt sich ein möglicher axialer Verlagerungsweg von bevorzugt bis zu 2 mm.

In Umfangsrichtung ist das Festlegungsteil 34 in der Aufnahme 33 gesichert.

Zwischen einer oberen, umlaufenden Stirnrandkante des Festlegungsteils 34 und einer dieser Stirnrandkante zugewandten umlaufenden Randkante der Aufnahme 33 ist eine Feder eingelegt. Hierbei handelt es sich bevorzugt um ein wellenförmiges Metallfederband, welches über den Umfang der Stirnrandkante des Festlegungsteiles 34 sich abwechselnd unterseitig der Aufnahme 33 und oberseitig auf dem Festlegungsteil 34 abstützt. Die Feder 35 beaufschlagt das Festlegungsteil 34 in eine beabstandete Stellung zur Aufnahme 33.

Auf der nach radial innen weisenden Kreisringfläche des Festlegungsteiles 34 sind gleichmäßig über den Umfang verteilt Auflaufschrägen 36 ausgeformt. Diese sind ausgebildet an von der Kreisringinnenfläche nach radial innen abragenden Gegen-Festlegungsmitteln 37.

Entsprechend der Zahl von Drehblockierungsvorsprüngen 20 beziehungsweise von Konturen K im Bereich der Öffnung 25 sind sechs solcher Gegen-Festlegungsmittel 37 mit Auflaufschrägen 36 vorgesehen, so dass in jeder möglichen Einsteckstellung die Festsetzungsvorsprünge 19 in Zusammenwirkung treten können mit jeweils einer Auflaufschräge 36.

Jede Auflaufschräge 36 geht über in einen Halterungsabschnitt 38 in Form einer Radialstufe, die sich in einer Querebene zur Achse x erstreckt.

Der Standfuß 26 wird zur Festlegung des Rührwerks 6 an dem Rührgefäß 4 derart angesetzt, dass die nach unten über dem Rührgefäß-Boden 5 frei abragenden Festsetzungsvorsprünge 19 durch drei der zwischen den Gegen-Festlegungsmitteln 37 frei gehaltenen Bereiche tauchen. Zufolge Drehen des Standfußes 26 relativ zu dem Rührgefäß 4 und somit auch relativ zu dem drehfest gelegten Rührwerk 6 gleiten die Festsetzungsvorsprünge 19 mit ihren Seitenwänden 23 entlang der Auflaufschrägen 36, wobei das ringförmige Festlegungsteil 34 entgegen der Kraft der Feder 35 in der Aufnahme 33 axial verlagert wird. Zufolge weiteren Drehens des Standfußes 26 treten abschließend die Festsetzungsvorsprünge 19 mit ihren Festsetzungsflanken 24 unter die jeweiligen Halterungsabschnitte 38 womit eine bajonettartige Verriegelung erreicht ist. Die Drehverlagerbarkeit des Standfußes 26 ist hierbei anschlagbegrenzt unter Zusammenwirkung von Standfußabschnitten mit Abschnitten des Rührgefäßes 4.

Zufolge dieser Ausgestaltung ist das Rührwerk 6 drehfest eingespannt, wobei das Rührwerk 6 mit dessen Aufsetzabschnitt 11 über die Dichtung 12 gegen die in das Rührgefäß-Innere weisende Fläche des Rührgefäß-Bodens 5 angezogen ist. Zugleich ist der Standfuß 36 über die bajonettartige Verriegelung mit dem Rührgefäß 4 verbunden.

Die Verriegelung ist reversibel, dies in handhabungstechnisch einfacher Weise zufolge Verdrehen des Standfußes 26 in die Gegenrichtung, wonach das Rührwerk 6 in Richtung auf das Rührgefäß-Innere herausgezogen und der Standfuß 26 abgenommen werden kann.

Durch die bevorzugte Anordnung von drei Festsetzungsvorsprüngen 19 ist in Zusammenwirkung mit dem standfußseitigen Festlegungsteil 34 sichergestellt, dass einerseits eine Kraftverteilung auf drei über den Umfang verteilten Stellen stattfindet und diese Kraftverteilung axial gleichmäßig auf alle Festsetzungsvorsprünge 19 verteilt wird.

**Bezugszeichenliste:**

| | | | |
|---|---|---|---|
| 1 | Küchenmaschine | 25 | Öffnung |
| 2 | Rührgefäß-Aufnahme | 26 | Standfuß |
| 3 | Bedienfeld | 27 | Abstützboden |
| 4 | Rührgefäß | 28 | Kragen |
| 5 | Rührgefäß-Boden | 29 | Rührgefäß-Wandung |
| 6 | Rührwerk | 30 | Ausnehmung |
| 7 | Haltegriff | 31 | Dom |
| 8 | Sockelbereich | 32 | Durchsetzungsöffnung |
| 9 | Rührwerkwelle | 33 | Aufnahme |
| 10 | Durchsetzungskörper | 34 | Festlegungsteil |
| 11 | Aufsetzabschnitt | 35 | Feder |
| 12 | Dichtung | 36 | Auflaufschräge |
| 13 | Messersatz | 37 | Gegen-Festlegungsmittel |
| 14 | Kupplungsmitnehmer | 38 | Halterungsabschnitt |
| 15 | Kupplungsaufnahme | | |
| 16 | Einführschräge | | |
| 17 | Stirnfläche | | |
| 18 | Zylinderabschnitt | | |
| 19 | Festsetzungsvorsprung | a | Einsteckrichtung |
| 20 | Drehblockierungsvorsprung | b | Überstandsmaß |
| 21 | Axialnut | c | Abstand |
| 22 | radiale Stirnfläche | r | Radius |
| 23 | Seitenwand | x | Achse |
| 24 | Festsetzungsflanke | | |
| K | Kontur | | |
| | | | |
| α | Winkel | | |
| β | Winkel | | |

## Patentansprüche

1. Rührgefäß (4) für eine Küchenmaschine (1) mit einem in dem Rührgefäß-Boden (5) angeordneten und in das Innere des Rührgefäßes (4) herausnehmbaren Rührwerk (6), wobei weiter ein mit dem Rührgefäß-Boden (5) außenseitig verbindbarer Standfuß (26) vorgesehen ist und eine Rührwerkwelle (9) den Rührgefäß-Boden (5) durchsetzt, wobei darüber hinaus an dem Rührwerk (6) ein Durchsetzungskörper (10) vorgesehen ist, der in Axialrichtung betrachtet auf mindestens zwei axial beabstandeten Ebenen, bezogen auf eine Drehachse (x) der Rührwerkwelle (9) radial vorstehende Festsetzungsvorsprünge (19) zur Festsetzung des Standfußes (26) an dem Rührgefäß (4) und Drehblockierungsvorsprünge (20) zur Zusammenwirkung mit dem Rührgefäß-Boden (5) aufweist, wobei weiter in dem Rührgefäß-Boden (5) eine zur Durchsetzung der Festsetzungsvorsprünge (19) und Aufnahme der Drehblockierungsvorsprünge (20) geeignete Kontur (K) ausgebildet ist, **dadurch gekennzeichnet, dass** die Kontur (K) drei- oder mehrfach über den Umfang sich identisch wiederholend und in gleicher Abfolge betreffend einen Umfangswinkel ausgebildet ist, wobei innerste Abschnitte einer Axialnut (21) in dem Durchsetzungskörper (10) angeordnet sind, zur Zusammenwirkung mit der Kontur (K).

2. Rührgefäß nach Anspruch 1, **dadurch gekennzeichnet, dass** die Festsetzungsvorsprünge (19) radial nicht weiter vorstehen als die Drehblockierungsvorsprünge (20).

3. Rührgefäß nach Anspruch 1 oder 2, **dadurch gekennzeichnet, dass** die Festsetzungsvorsprünge (19) maximal eine gleiche Umfangserstreckung wie die Drehblockierungsvorsprünge (20) aufweisen.

4. Rührgefäß nach einem der vorhergehenden Ansprüche, **dadurch gekennzeichnet, dass** vorgelagert zu den Festsetzungsvorsprüngen (19) eine umlaufende Einführschräge (16) ausgebildet ist, die eine geringere radiale Erstreckung als die Festsetzungsvorsprünge (19) aufweist, wobei ein Festsetzungsvorsprung (19) sich absatzartig übergehend von der größten Radialerstreckung der Einführschräge (16) ausgehend erstreckt.

5. Rührgefäß nach Anspruch 4, **dadurch gekennzeichnet, dass** die Einführschräge (16) geschlossen ausgebildet ist.

6. Rührgefäß nach einem der vorhergehenden Ansprüche, **dadurch gekennzeichnet, dass** ein Festsetzungsvorsprung (19) auf Seiten der Drehblockierungsvorsprünge (20) ein bezüglich einer Axialerstreckung des Durchsetzungskörpers (10) zwischen den Festsetzungsvorsprüngen (19) und den Drehblockierungsvorsprüngen (20) gegebenes radiales Überstandsmaß aufweist von einem halben Millimeter oder mehr und dass sich die Einführschräge (16) jedenfalls umfangsmäßig außerhalb eines Festsetzungsvorsprunges (19) bis maximal zu dem radial inneren Maß des radialen Überstandsmaßes erstreckt.

7. Rührgefäß nach einem der Ansprüche 4 bis 6, **dadurch gekennzeichnet, dass** die Einführschräge (16) hinsichtlich ihres größten Radialmaßes ein geringstes Radialmaß eines Nutbodens nicht übertrifft.

8. Rührgefäß nach einem vorhergehenden Ansprüche, **dadurch gekennzeichnet, dass** ein Festsetzungsvorsprung (19) in radialer Draufsicht eine im Wesentlichen dreieckförmige Kontur aufweist, wobei der Spitzenbereich auf der den Drehblockierungsvorsprüngen (20) abgewandten Seite ausgebildet ist.

9. Rührgefäß nach einem der vorhergehenden Ansprüche, **dadurch gekennzeichnet, dass** eine radiale Stirnfläche (22) eines Festsetzungsvorsprunges (19) mit einer Achse (x) der Rührwerkwelle (9) im Querschnitt einen spitzen Winkel (β) einschließt.

10. Rührgefäß nach einem der vorhergehenden Ansprüche, **dadurch gekennzeichnet, dass** axial zwischen den Festsetzungsvorsprüngen (19) und den Drehblockierungsvorsprüngen (20) ein durch die Axialnuten (21) unterbrochener Zylinderabschnitt (18) ausgebildet ist.

11. Rührgefäß nach einem der vorhergehenden Ansprüche, **dadurch gekennzeichnet, dass** der Standfuß (26) eine Durchsetzungsöffnung (32) für die Rührwerkwelle (9) aufweist, wobei diese zugleich zur Festsetzung des Standfußes (26) an dem Rührgefäß-Boden (5) in Zusammenwirkung mit den Festsetzungsvorsprüngen (19) ausgebildet ist.

12. Rührgefäß nach Anspruch 11, **dadurch gekennzeichnet, dass** die Durchsetzungsöffnung (32) eine an die Anzahl der Drehblockierungsvorsprünge (20) angepasste Anzahl an Auflaufschrägen (36) für die Festsetzungsvorsprünge (19) aufweist und dass die Auflaufschrägen (36) in einen im Wesentlichen senkrecht zu der Achse (x) der Rührwerkwelle (9) verlaufenden Halterungsabschnitt (38) übergehen.

13. Rührgefäß nach Anspruch 12, **dadurch gekennzeichnet, dass** die Auflaufschrägen (36) an einem innerhalb des Standfußes (26) abgefederten Festlegungsteil (34) ausgebildet sind.

14. Rührgefäß nach Anspruch 13, **dadurch gekennzeichnet, dass** das Festlegungsteil (34) kreisringförmig ausgebildet ist.

15. Rührgefäß nach einem der Ansprüche 13 oder 14, **dadurch gekennzeichnet, dass** das Festlegungsteil (34) unter Zwischenlage einer Feder (35) in einer kreisringförmigen Aufnahme (33) rastgehaltert ist, wobei, bevorzugt, dass die Feder (35) als in Umfangsrichtung wellenförmiges Federelement ausgebildet ist und/oder die Feder ein Metallfederband ist.

## Claims

1. Mixing vessel (4) for a food processor (1), comprising a mixer (6) which is arranged in the bottom (5) of the mixing vessel and is removable inside the mixing vessel (4), a base (26) which can be connected to the outside of the bottom (5) of the mixing vessel also being provided and a mixer shaft (9) passing through the bottom (5) of the mixing vessel, a penetration body (10) also being provided on the mixer (6), which penetration body comprises securing projections (19) for securing the base (26) to the mixing vessel (4) which, when viewed in the axial direction in at least two axially spaced planes, radially protrude in relation to a rotational axis (x) of the mixer shaft (9), said penetration body further comprising anti-rotation projections (20) for interacting with the bottom (5) of the mixing vessel, a contour (K) also being formed in the bottom (5) of the mixing vessel and being capable of penetrating the securing projections (19) and of receiving the anti-rotation projections (20), **characterised in that** the contour (K) is designed so as to circumferentially repeat itself three or more times and in the same sequence in relation to a circumferential angle, innermost portions of an axial groove (21) being arranged in the penetration body (10) for interacting with the contour (K).

2. Mixing vessel according to claim 1, **characterised in that** the securing projections (19) do not radially protrude further than the anti-rotation projections (20).

3. Mixing vessel according to either claim 1 or claim 2, **characterised in that** the securing projections (19) have a circumferential extent that is at most equal to that of the anti-rotation projections (20).

4. Mixing vessel according to any of the preceding claims, **characterised in that** a circumferential lead-in chamfer (16) is formed ahead of the securing projections (19), the radial extent of which chamfer is less than that of the securing projections (19), a securing projection (19) extending outwards in a step-like manner from the greatest radial extent of the lead-in chamfer (16).

5. Mixing vessel according to claim 4, **characterised in that** the lead-in chamfer (16) is closed.

6. Mixing vessel according to any of the preceding claims, **characterised in that** a securing projection (19), on the side facing the anti-rotation projections (20), has a radial projecting length of half a millimetre or more in relation to an axial extent of the penetration body (10) between the securing projections (19) and the anti-rotation projections (20), and **in that**, in any case, the circumference of the lead-in chamfer (16) outside of a securing projection (19) extends at most up to the radial inner dimension of the radial projection length.

7. Mixing vessel according to any of claims 4 to 6, **characterised in that** the greatest radial dimension of the lead-in chamfer (16) does not exceed a lowest radial dimension of the bottom of a groove.

8. Mixing vessel according to any of the preceding claims, **characterised in that** a securing projection (19) comprises, in radial plan view, a substantially triangular contour, the tip region of which is formed on the side facing away from the anti-rotation projections (20).

9. Mixing vessel according to any of the preceding claims, **characterised in that**, in cross section, a radial end face (22) of a securing projection (19) encloses an acute angle β with an axis (x) of the mixer shaft (9).

10. Mixing vessel according to any of the preceding claims, **characterised in that** a cylindrical portion (18) which is interrupted by the axial grooves (21) is axially formed between the securing projections (19) and the anti-rotation projections (20).

11. Mixing vessel according to any of the preceding claims, **characterised in that** the base (26) comprises a penetration opening (32) for the mixer shaft (9), said shaft at the same time being designed for securing the base (26) to the bottom (5) of the mixing vessel by interacting with the fixation projections (19).

12. Mixing vessel according to claim 11, **characterised in that** the penetration opening (32) comprises a number of leading chamfers (36) for the fixing projections (19) which is adapted to the number of anti-rotation projections (20) and **in that** the leading chamfers (36) transition into a holding portion (38) which extends substantially perpendicularly to the axis (x) of the mixer shaft (9).

13. Mixing vessel according to claim 12, **characterised in that** the leading chamfers (36) are formed on a securing part (34) which is spring-mounted inside the base (26).

14. Mixing vessel according to claim 13, **characterised in that** the securing part (34) is annular.

15. Mixing vessel according to either claim 13 or claim 14, **characterised in that** the securing part (34) is locked in an annular recess (33) with a spring (35) placed therebetween, the spring (35) preferably being formed as a spring element which undulates in the peripheral direction and/or the spring being a metal spring strip.

## Revendications

1. Récipient d'agitation (4) pour un robot ménager (1) ayant un agitateur (6) agencé dans le fond (5) du récipient d'agitation et pouvant être enlevé à l'intérieur du récipient d'agitation (4), dans lequel il est également prévu un pied de pose (26) pouvant être relié du côté extérieur avec le fond (5) du récipient d'agitation et un arbre d'agitateur (9) passe à travers le fond (5) du récipient d'agitation, dans lequel il est en outre prévu, pour l'agitateur (6), un corps traversant (10) qui présente, considéré dans la direction axiale, sur au moins deux plans distants axialement, des saillies de fixation (19) dépassant radialement par rapport à un axe de rotation (x) de l'arbre d'agitateur (9) destinées à fixer le pied de pose (26) au récipient d'agitation (4) et des saillies de blocage de rotation (20) destinées à coopérer avec le fond (5) du récipient d'agitation, un contour (K) approprié destiné au passage des saillies de fixation (19) et à la réception des saillies de blocage de rotation (20) étant par ailleurs réalisé dans le fond (5) du récipient d'agitation, **caractérisé en ce que** le contour (K) est réalisé trois fois ou davantage sur la circonférence, en étant reproduit à l'identique et dans une même succession par rapport à un angle circonférentiel, les sections les plus à l'intérieur d'une rainure axiale (21) étant agencées dans le corps traversant (10) afin de coopérer avec le contour (K).

2. Récipient d'agitation selon la revendication 1, **caractérisé en ce que** les saillies de fixation (19) ne dépassent pas davantage radialement que les saillies de blocage de rotation (20).

3. Récipient d'agitation selon la revendication 1 ou 2, **caractérisé en ce que** les saillies de fixation (19) présentent au maximum une même extension circonférentielle que les saillies de blocage de rotation (20).

4. Récipient d'agitation selon l'une des revendications précédentes, **caractérisé en ce qu'**il est réalisé, en amont des saillies de fixation (19), un biseau d'insertion circonférentiel (16) qui présente une extension radiale inférieure aux saillies de fixation (19), une saillie de fixation (19) s'étendant à la façon d'un épaulement dans une transition à partir de la plus grande extension radiale du biseau d'insertion (16).

5. Récipient d'agitation selon la revendication 4, **caractérisé en ce que** le biseau d'insertion (16) est réalisé de façon fermée.

6. Récipient d'agitation selon l'une des revendications précédentes, **caractérisé en ce qu'**une saillie de fixation (19) présente, sur le côté des saillies de blocage de rotation (20), une dimension de dépassement radiale donnée d'un demi-millimètre ou davantage entre les saillies de fixation (19) et les saillies de blocage de rotation (20) par rapport à une extension axiale du corps traversant (10) et **en ce que** le biseau d'insertion (16) s'étend respectivement au niveau de la circonférence en dehors d'une saillie de fixation (19) au maximum jusqu'à la dimension intérieure radiale de la dimension de dépassement radiale.

7. Récipient d'agitation selon l'une des revendications 4 à 6, **caractérisé en ce que** le biseau d'insertion (16) ne dépasse pas, au niveau de sa dimension radiale la plus grande, la dimension radiale la plus petite d'un fond de la rainure.

8. Récipient d'agitation selon l'une des revendications précédentes, **caractérisé en ce qu'**une saillie de fixation (19) présente, dans une vue radiale du dessus, un contour essentiellement triangulaire, la zone de pointe étant réalisée sur le côté opposé aux saillies de blocage de rotation (20).

9. Récipient d'agitation selon l'une des revendications précédentes, **caractérisé en ce qu'**une surface frontale radiale (22) d'une saillie de fixation (19) inclut un angle aigu (β) dans une section avec un axe (x) de l'arbre d'agitateur (9).

10. Récipient d'agitation selon l'une des revendications précédentes, **caractérisé en ce qu'**une section de cylindre (18) interrompue par les rainures axiales (21) est réalisée axialement entre les saillies de fixation (19) et les saillies de blocage de rotation (20).

11. Récipient d'agitation selon l'une des revendications précédentes, **caractérisé en ce que** le pied de pose (26) présente une ouverture traversante (32) pour l'arbre d'agitateur (9), cette dernière étant en même temps réalisée aux fins de la fixation du pied de pose (26) sur le fond (5) du récipient d'agitation en coopération avec les saillies de fixation (19).

12. Récipient d'agitation selon la revendication 11, **caractérisé en ce que** l'ouverture traversante (32) présente un nombre de biseaux d'arrêt (36) pour les saillies de fixation (19) correspondant au nombre des saillies de blocage de rotation (20) et **en ce que** les biseaux d'arrêt (36) forment ensuite une section de retenue (38) s'étendant dans une direction sensiblement perpendiculaire à l'axe (x) de l'arbre d'agitateur (9).

13. Récipient d'agitation selon la revendication 12, **caractérisé en ce que** les biseaux d'arrêt (36) sont réalisés sur une partie d'installation (34) amortie à l'intérieur du pied de pose (26).

14. Récipient d'agitation selon la revendication 13, **caractérisé en ce que** la partie d'installation (34) est réalisée en forme d'anneau circulaire.

15. Récipient d'agitation selon l'une des revendications 13 ou 14, **caractérisé en ce que** la partie d'installation (34) est maintenue par encliquetage avec un ressort (35) intercalé dans un logement en forme d'anneau circulaire (33), étant entendu que de préférence, le ressort (35) est réalisé en tant qu'élément de ressort ayant une forme ondulée dans la direction circonférentielle et/ou le ressort est une bande de ressort métallique.
